# EUROPEAN PATENT SPECIFICATION

(11) **EP 2 388 166 B1**
(45) Date of publication and mention of the grant of the patent: **17.07.2013**
(21) Application number: 10163476.4
(22) Date of filing: 20.05.2010
(51) Int. Cl.: B60R 22/18, B60R 22/22, B60R 22/24, B60R 22/26

(54) **Seat belt anchor**
Sitzgurtbefestigung
Ancrage de ceinture de sécurité

(43) Date of publication of application: 23.11.2011
(73) Proprietor: Volvo Car Corporation, 405 31 Göteborg (SE)
(72) Inventor: Aldeborg, Gert, 45197, Uddevalla (SE); Svensson, Birger, 42932, Kullavik (SE)
(74) Representative: Widahl, Jenny Marie

(56) References cited:
- EP-A1- 1 557 327
- EP-A1- 1 918 164
- DE-A1- 19 915 275
- FR-A1- 2 723 556
- GB-A- 1 172 778

## Description

### TECHNICAL FIELD

The present invention relates to a seat belt anchor, a seat belt arrangement, a method for attaching a seat belt portion to a seat belt anchor and a method for mounting a seat belt arrangement in a vehicle.

### BACKGROUND OF THE INVENTION

A seat belt arrangement is typically used in a vehicle in order to increase the safety of a vehicle occupant in case of an accident. The ends of a seat belt are attached to a body of the vehicle or a vehicle seat by means of seat belt anchors. Commonly the seat belt anchors themselves are attached to the body of the vehicle or the seat, e.g. by means of a bolt or a rivet. However, there is typically a shortage of available space for the operation of a tool in order to secure the bolt or rivet into the body of the vehicle or the seat. Therefore in some cases a side panel, which normally covers the side and/or the frame of the seat, has to be removed to create the needed space for operation of the tool.

The document US 2006/0279130 discloses an apparatus for securing seat belt components using an anchor. The anchor is attached to the vehicle structure via a cable. A mounting member is configured to fixedly secure a housing to the cable. The housing is configured for receiving a tongue member. The seat belt is attached to a passage through the tongue member by means of the seat belt forming a loop.

The solution of US 2006/0279130 utilizing the cable would make attachment of the anchor easier than for conventional seat belt anchors. However, there are still several parts involved, which are mechanically attached to each other. There is therefore a desire to find a less complex solution using fewer parts.

Document FR 2 723 556 A1 relates to a seat belt arrangement of a motor vehicle according to the preamble of claim 1, comprising a fixed anchoring plate having two fastening means for respectively two loops of the seat belt. The first loop at the end of the belt permanently fixes the belt to the anchoring plate. The second loop, formed in the belt between the buckle and the first loop, can be hooked onto the anchoring plate so as to reduce the available length of the belt. In an embodiment, the anchoring plate comprises a slot allowing fixing of the first belt loop and a notch cut out in its side for receiving the second loop. The notch on the anchoring plate may be closed by a retractable fastener during hooking of the second loop.

### SUMMARY OF THE INVENTION

The object of the present invention is to overcome or ameliorate at least one of the disadvantages of the prior art, or to provide a useful alternative.

It is desirable to provide a seat belt anchor comprising fewer parts than conventional seat belt anchors.

It is also desirable to provide an arrangement and a method for quickly and securely attaching the seat belt to the seat belt anchor.

It is further desirable to provide a seat belt anchor, wherein the seat belt may easily be attached to the seat belt anchor after the seat belt anchor has been mounted to the body of the vehicle or the seat.

The object above may be achieved by the invention according to claim 1.

In a first aspect of the present invention there is provided a seat belt anchor comprising
- a first portion, directly attachable to a vehicle body and/or a vehicle seat; and
- a second portion comprising a passage through which a seat belt portion, is to be accommodated.

The passage is utilized for attaching the seat belt anchor to the seat belt portion. Further, the passage has a closable opening. The opening has an open state wherein the seat belt portion may be inserted into the passage and a closed state wherein the opening retains the seat belt portion in the seat belt anchor.

Thereby a seat belt anchor is provided comprising fewer parts than conventional seat anchors. The seat belt anchor can be used for quickly and securely attaching the seat belt to the seat belt anchor. It is further possible to attach the seat belt to the seat belt anchor after the seat belt anchor has been mounted to the body of the vehicle or the seat.

The closable opening has an open state and a closed state. Being in the open state it may be closed, thus it is termed "closable". Being in the closed state it may be opened. For the sake of the invention, the opening must be able to be in the open state at least once for introducing the seat belt and then be able to be closed.

In an embodiment, the first portion and the second portion are made in one piece. Thereby the number of parts is kept as low as possible.

The seat belt anchor may further comprise a removable closure member for closing the opening. The closure member may be moved in order to transit the opening of the seat belt anchor between its open state and its closed state. For example, the closure member may be removed in order to open the opening. It may then be replaced in order to close the opening.

The closure member may be a bolt, a screw, a pin or a clip. These are all examples of closure members which are easy to operate in order to open or close the opening. They may be operated by hand or by a tool. The operation may be measurable, such as measuring the torsional moment. The attachment of the closure member may also be confirmed by a clicking sound indicating that the closure member has reached its intended closing position.

The closure member may be located at a lateral side of the second portion or at the top side of the second portion. This localization facilitates the operation of the closure member.

The top side of the second portion is the side furthest away from the attachment of the first portion. The top side faces in the direction of the seat belt. If the seat belt anchor is a lower seat belt anchor attached to the seat or the sill, the top side is literally essentially the side on the top of the second portion. However, if the seat belt anchor is an upper seat belt anchor attaching the seat belt above the shoulder, the top side of the second portion will face vertically or downwards or somewhere therebetween when the seat belt anchor is mounted in the vehicle with the seat belt in it.

The lateral sides of the second portion are the sides being substantially perpendicular to the top side. The direction of the lateral sides substantially coincides with the length direction of the seat belt when the seat belt is attached to the seat belt anchor.

The second portion may have a rectangular shape defining the top side and the lateral sides. The second portion may also have another shape, such as square, polygonal, oval or elliptic. In that case the top side may be the rim of the passage being located most distal seen from the attachment of the seat belt anchor to the vehicle body or the seat, even if the rim does not form a straight line. The lateral side may then be the rim of the passage being furthest away from the central axis in the length direction of the seat belt. In an embodiment, the second portion of the seat belt anchor essentially has the form of a U with two legs and an intermediate portion. The passage is then formed by the U and the closure member attached between the legs of the U, preferably at the ends of the legs.

In a second aspect of the present invention there is provided a seat belt arrangement comprising a seat belt and a seat belt anchor, wherein a seat belt portion of the seat belt is attached to the seat belt anchor and the seat belt anchor is according to an above-described seat belt anchor. In particular, a portion of the seat belt close to one of its ends may be the seat belt portion of the seat belt attached to the seat belt anchor.

In an embodiment the seat belt portion forms a closed loop and a part of the second portion passes through the loop, thereby attaching the seat belt portion to the seat belt anchor. The closed loop is formed in order to facilitate attachment of the seat belt. It may be formed off-line from the production line for the vehicle itself. In particular, the loop may be arranged at one of the ends of the seat belt, e.g. by folding the outmost portion of the seat belt backwards and securing it to the seat belt itself. The loop is in that case formed by the attachment of the outmost end.

In a third aspect of the present invention there is provided a vehicle comprising a seat belt anchor and/ or a seat belt arrangement according to above.

In a fourth aspect of the present invention there is provided a method for attaching a seat belt portion, to a seat belt anchor, the seat belt anchor being as described above.

The method comprises the steps of:
- inserting the seat belt portion through the opening of the passage, the opening being in the open state; and
- closing the opening, thereby attaching the seat belt portion to the seat belt anchor.

This method provides a quick and secure attachment of the seat belt portion to the seat belt anchor.

In a fifth aspect of the present invention there is provided a method for mounting a seat belt arrangement in a vehicle. The vehicle has a body and a seat. The seat belt arrangement comprises a seat belt and a seat belt anchor, the seat belt anchor being as described above.

The method comprises the steps of:
- attaching the first portion of the seat belt anchor to the vehicle body and/or the vehicle seat;
- inserting a seat belt portion through the opening, the opening being in the open state; and
- closing the opening, thereby attaching the seat belt portion to the seat belt anchor. The first portion may be directly attached to the vehicle body and/or the vehicle seat without any intermediate additional parts being used.

This method provides a quick and secure attachment of the seat belt portion to the seat belt anchor when mounting the seat belt arrangement in the vehicle.

In an embodiment of the method, the step of inserting the seat belt portion through the opening is performed after the step of attaching the seat belt anchor to the vehicle body and/or the vehicle seat. This is made possible according to the invention by utilizing the closable opening.

The step of inserting the seat belt portion through the opening may be performed after having mounted the vehicle seat in the vehicle. If the seat belt is attached from above, for a lower seat belt anchor, there is available space above the seat belt anchor for e.g. utilizing a tool. Similarly, if the seat belt is attached from below, for an upper seat belt anchor, there is available space below the seat belt anchor for e.g. utilizing a tool. There is consequently no need to remove any side panels at the seat, sill and/or pillar.

### BRIEF DESCRIPTION OF THE DRAWINGS

The present invention will hereinafter be further explained by means of non-limiting examples with reference to the appended figures wherein:
Fig. 1 is a schematic illustration of a seat belt arrangement according to the invention when mounted in a vehicle;
Fig. 2 illustrates a seat belt anchor according to the invention comprising a passage with an opening being in a closed state; and
Fig. 3 illustrates the seat belt anchor of Fig. 2 with the opening being in an open state.

### DETAILED DESCRIPTION OF PREFERRED EMBODIMENTS

The invention will, in the following, be exemplified by embodiments. It should however be realized that the embodiments are included in order to explain principles of the invention and not to limit the scope of the invention, defined by the appended claims. Details from two or more of the embodiments may be combined with each other.

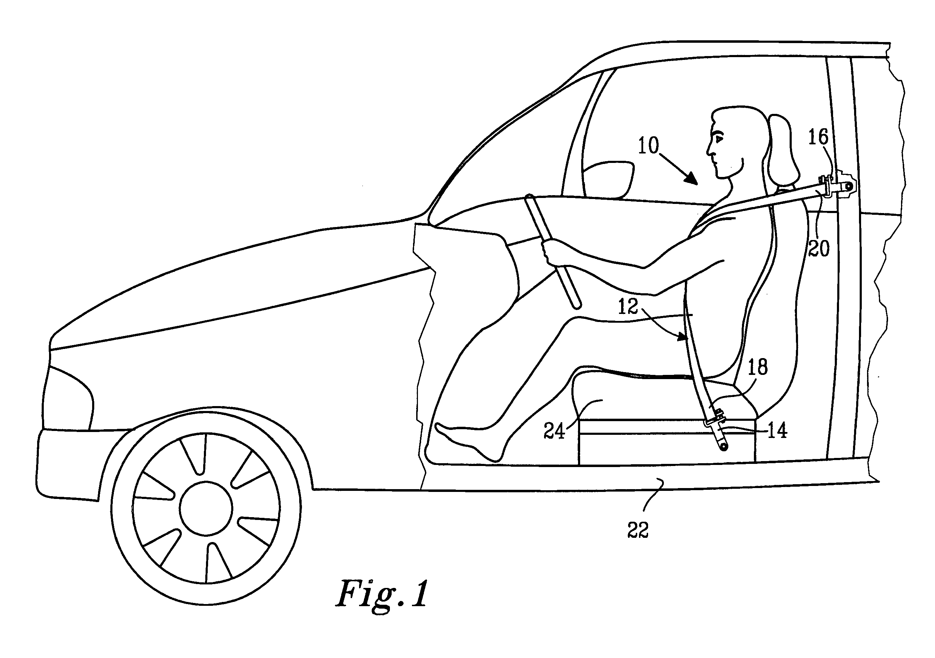

Figure 1 schematically illustrates a seat belt arrangement 10 according to the invention when mounted in a vehicle having a vehicle body and a seat. The seat belt arrangement comprises a seat belt 12, a lower seat belt anchor 14 and an upper seat belt anchor 16. The seat belt anchors 14, 16 are utilized to attach end portions 18, 20 of the seat belt 12 to the vehicle body 22 or to the seat 24. In the illustrated case the lower end portion 18 is attached to the seat 24 by the lower seat belt anchor 14, while the upper end portion 20 is attached to the vehicle body 22 by the upper seat belt anchor 16. One or both of the seat belt anchors 14, 16 may be configured according to the invention. The seat belt arrangement 10 may further comprise additional items, such as a buckle and a belt tensioning unit (not illustrated).

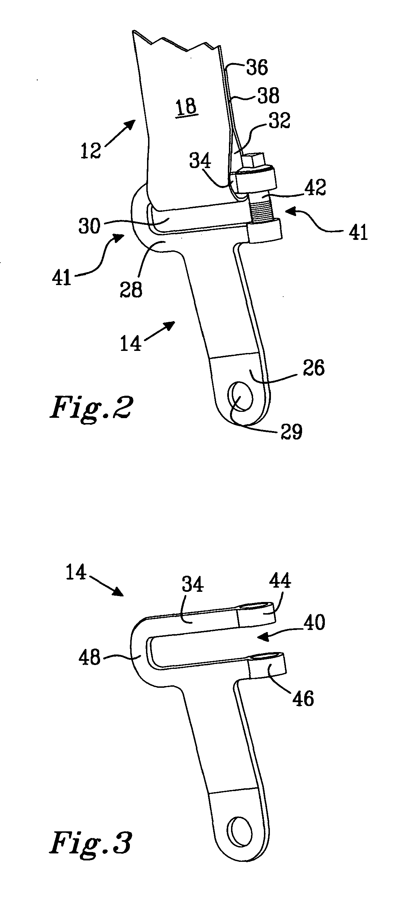

Figures 2 and 3 illustrate a detailed view of a seat belt anchor according to the invention, in this case the lower seat belt anchor 14. The seat belt anchor 14 comprises a first portion 26 and a second portion 28. The first portion 26 is directly attachable to the vehicle body 22 or to the seat 24, e.g. by means of a screw or a bolt and nut connection (not illustrated) through a hole 29 in the first portion 26. The second portion 28 comprises a passage 30, through which a seat belt portion is accommodated, here the lower end portion 18. As can be gleaned from Figure 2, the seat belt portion forms a loop 32. A part 34 of the second portion 28 of the seat belt anchor 14 passes through the loop 32, thereby attaching the lower end portion 18 of the seat belt 12 to the seat belt anchor 14. The loop 32 is closed by securing an end 36 of the end portion 18 to the seat belt 12 itself, e.g. by means of sewing or gluing. In the illustrated exemplary embodiment, there is an overlap 38 of a few centimetres, where the seat belt 12 is double, securing the loop 32.

The passage 30 in the seat belt anchor 14 has an opening 40 at a lateral side 41. The opening 40 has a closed state wherein the opening 40 retains the seat belt portion 18 in the seat belt anchor 14, see Figure 2, and an open state wherein the seat belt portion 18 may be inserted into the passage 40, see Figure 3. The opening 40 can be closed by means of a closure member 42, e.g. a screw, a bolt, a pin or a clip. When the opening is in its open state, the loop 32 may easily be inserted through the opening 40 and threaded onto the part 34 of the second portion 28, such that the part 34 passes through the loop 32. Thereafter the opening 40 may be closed by the closure member 42 and the seat belt 12 is thereby securely attached to the seat belt anchor 14.

In Figs. 2 and 3, the second portion 28 essentially has the form of a U, with two legs 44, 46 and an intermediate portion 48. The closure member 42 is attached between the ends of the legs 44, 46 of the U, such that the passage 30 is formed. When the opening 40 is in its closed state, the passage 30 has a closed circumference retaining the seat belt 12 in the seat belt anchor 14.

Moreover, Figs. 1-3 illustrate an important advantage over conventional technology:

According to prior art solutions, the passage 30 does not have any opening. Therefore, the end 36 of the seat belt 12 must be inserted through the passage 30 and then folded backwards and secured to form the loop 32, i.e. first the seat belt is inserted through the passage and thereafter the loop 32 is formed. This is commonly done in a separate production line. Then the lower seat belt 14 is directly and fixedly attached to the seat 24 or the vehicle body 22, e.g. by means of a screw or bolt plus nut connection. However, since there is little free space around the first portion 26, it is difficult to access the screw or bolt in order to tighten it. Therefore, commonly a side panel, which normally covers the side and/or the frame of the seat 24, may have to be removed to gain access.

According to the invention, first the loop 32 is made in the seat belt 12. Thereafter the seat belt 12 is, as a separate step, attached to the seat belt anchor 14 by inserting it through the opening 40 and threading the loop 32 over the part 34 of the second portion 28. In the case of the closure member 42 being located at the top side, the closure member may instead be passed through the loop 32. Thereafter the opening 40 is closed by the closure member 42, such that the seat belt 12 is retained by the seat belt anchor 14. The step of attaching of the seat belt anchor 14 to the vehicle body 22 or seat 24 is independent of the step of attaching the seat belt 12 to the seat belt anchor 14, and these two steps may be carried out in an arbitrary order. The seat belt 12 is fastened from above to a seat belt anchor 14 being pre-assembled in the vehicle body 22 or to the seat 24. When the seat belt anchor 14 is pre-assembled, there is accordingly adequate space to attach and secure it in an appropriate way, e.g. with suitable tools. Since the seat belt 12 is attached from above with the seat 24 being located in the vehicle, there is available space above the seat belt anchor 14. As a comparison, according to conventional technology, there may be a need to remove the side panel.

Moreover, commonly a production data system may be used to log that screws, bolts etc are accurately attached, e.g. by measuring the torsional moment used. The production data system may be used to afterwards recall production data. The logging is especially important for the attachment of safety arrangements, such as a seat belt arrangement 10. By utilizing a seat belt arrangement 10 according to the invention, the attachment of the seat belt 12 to the seat belt anchor 14 by closing the closure member 42 may be made on the production line and thereby be logged by the production system.

Even if Figs. 1 to 3 illustrate that the seat belt anchor 14 is attached to an end portion 18, 20 of the seat belt 12, it is also possible to attach the seat belt to the seat belt anchor anywhere along the seat belt 12. In that case, the seat belt 12 itself may pass through the passage 30 and no loop 32 would need to be formed.

Further modifications of the invention within the scope of the appended claims are feasible. As such, the present invention should not be considered as limited by the embodiments and figures described herein. Rather, the full scope of the invention should be determined by the appended claims, with reference to the description and drawings.

Even if the enclosed embodiments illustrate the seat belt anchor and the seat belt arrangement in a vehicle, such as a car, they may also be used in other vehicles, such as a bus, lorry or truck, or vessels, such as an aircraft, a train or a boat.

## Claims

1. A seat belt anchor (14) comprising
- a first portion (26), directly attachable to a vehicle body (22) and/or a vehicle seat (24); and
- a second portion (28) comprising a passage (30) through which a seat belt portion (18, 20) is to be accommodated,
said passage (30) being utilized for attaching said seat belt anchor (14) to said seat belt portion (18, 20),
said passage (30) has a closable opening (40),
said opening (40) having an open state, wherein said seat belt portion (18, 20) may be inserted into said passage (30), and a closed state, wherein said opening (40) retains said seat belt portion (18, 20) in said seat belt anchor (14),
**characterized in that**
said passage (30) has a closed circumference when said opening (40) is in said closed state,
said seat belt anchor (14) further comprises a removable closure member (42) for closing said opening (40), and
said closure member (42) is accessible from above through a general vertical axis of the closure member (42), when being mounted in a vehicle.

2. The seat belt anchor (14) according to claim 1, wherein said first portion (26) and said second portion (28) are made in one piece.

3. The seat belt anchor (14) according to claim 1 or 2, wherein said closure member (42) is a bolt, a screw, a pin or a clip.

4. The seat belt anchor (14) according to any one of the preceding claims, wherein said closure member (42) is located at a lateral side (41) of said second portion (28).

5. The seat belt anchor (14) according to any one of the preceding claims, wherein said removable closure member (42) is located at a top side of said second portion (28).

6. The seat belt anchor (14) according to any one of the preceding claims, wherein said second portion (28) essentially has the form of a U, with two legs (44, 46) and an intermediate portion (48), said passage (30) being formed by the U and said closure member (42) attached between the legs (44, 46) of said U.

7. The seat belt anchor (14) according to any one of the preceding claims, wherein said seat belt anchor (14) comprises only one receptacle for receiving said seat belt portion (18, 20), said passage (30) having said closable opening (40) forming said only one receptacle.

8. A seat belt arrangement (10) comprising a seat belt (12) and a seat belt anchor (14), said seat belt anchor (14) being in accordance with any one of the preceding claims, wherein a seat belt portion (18, 20) of said seat belt (12) is attached to said seat belt anchor (14).

9. The seat belt arrangement (10) according to claim 8, wherein said seat belt portion (18, 20) forms a closed loop (32) and a part (34) of said second portion (28) passes through said loop (32), thereby attaching said seat belt portion (18, 20) to said seat belt anchor (14).

10. The seat belt arrangement (10) according to claim 8 or 9, wherein said seat belt portion (18, 20) is an end portion of said seat belt (12).

11. A vehicle comprising a seat belt anchor (14) according to any one of claims 1-7 and/ or a seat belt arrangement (10) according to any one of claims 8-10.

12. A method for attaching a seat belt portion (18, 20) to a seat belt anchor (14), said seat belt anchor (14) being in accordance with any one of claims 1-7,
said method comprising the steps of:
- inserting said seat belt portion (18, 20) through said opening (40) of said passage (30), said opening (40) being in the open state; and
- thereafter closing said opening (40), thereby attaching said seat belt portion (18, 20) to said seat belt anchor (14), said passage (30) having a closed circumference when closed.

13. The method according to claim 12, said seat belt portion (18, 20) being an end portion of said seat belt (12), said method comprising:
- forming a loop (32) of said seat belt portion (18, 20),
- inserting said seat belt portion (18, 20) through said opening (40) of said passage (30), said opening (40) being in the open state, by threading said loop (32) over said part (34) of said second portion (28) of said seat belt anchor (14), or by passing said closure member through the loop,
- thereafter closing said opening (40) by means of said closure member (42), thereby attaching said loop (32) to said seat belt anchor (14), said passage (30) having a closed circumference when closed.

14. A method for mounting a seat belt arrangement (10) in a vehicle, said vehicle comprising a body (22) and a seat (24),
said seat belt arrangement (10) comprising a seat belt (12) and a seat belt anchor (14), said seat belt anchor (14) being in accordance with any one of claims 1-7, said method comprising the steps of:
- attaching said first portion (26) of said seat belt anchor (14) to said vehicle body (22) and/or said vehicle seat (24);
- inserting a seat belt portion (18, 20) through said opening (40), said opening (40) being in the open state; and
- thereafter closing said opening (40), thereby attaching said seat belt portion (18, 20) to said seat belt anchor (14), said passage (30) having a closed circumference when closed.

15. The method according to claim 14, wherein said step of inserting said seat belt portion (18, 20) through said opening (40) is performed after the step of attaching said seat belt anchor (14) to said vehicle body (22) and/or said vehicle seat (24).

16. The method according to claim 14 or 15, wherein said step of inserting said seat belt portion (18, 20) through said opening (40) is performed after having mounted said vehicle seat (24) in said vehicle.

17. The method according to claim 16, wherein said seat belt is attached from above or below, said seat belt anchor (14) being pre-assembled in said vehicle body (22) and/or to said vehicle seat (24).

18. The method according to any one of claims 12-17, wherein the step of closing said opening is measured and optionally logged in a production data system, e.g. by measuring and logging a torsional moment used.

## Patentansprüche

1. Sitzgurtbefestigung (14), die Folgendes aufweist:
- einen ersten Teil (26), der direkt an einer Fahrzeugkarosserie (22) und/oder an einem Fahrzeugsitz (24) befestigt werden kann; und
- einen zweiten Teil (28), der eine Passage (30) aufweist, durch die ein Sitzgurtteil (18, 20) durchgeht,
wobei die Passage (30) verwendet wird, um die Sitzgurtbefestigung (14) an dem Sitzgurtteil (18, 20) zu befestigen,
wobei die Passage (30) eine verschließbare Öffnung (40) hat,
wobei die Öffnung (40) einen offenen Zustand hat, in dem der Sitzgurtteil (18, 20) in die Passage (30) eingefügt werden kann, und einen geschlossenen Zustand, in dem die Öffnung (40) den Sitzgurtteil (18, 20) in der Sitzgurtbefestigung (14) hält,
**dadurch gekennzeichnet, dass**
die Passage (30) einen geschlossenen Umfang hat, wenn die Öffnung (40) in dem geschlossenen Zustand ist,
die Sitzgurtbefestigung (14) ferner ein abnehmbares Verschlusselement (42) zum Schließen der Öffnung (40) aufweist, und
das Verschlusselement (42) von oberhalb durch eine allgemein vertikale Achse des Verschlusselements (42) her zugänglich ist, wenn es in ein Fahrzeug montiert ist.

2. Sitzgurtbefestigung (14) nach Anspruch 1, wobei der erste Teil (26) und der zweite Teil (28) aus einem Teil hergestellt sind.

3. Sitzgurtbefestigung (14) nach Anspruch 1 oder 2, wobei das Verschlusselement (42) ein Bolzen, eine Schraube, ein Stift oder ein Clip ist.

4. Sitzgurtbefestigung (14) nach einem der vorhergehenden Ansprüche, wobei das Verschlusselement (42) an einer seitlichen Seite (41) des zweiten Teils (28) liegt.

5. Sitzgurtbefestigung (14) nach einem der vorhergehenden Ansprüche, wobei das abnehmbare Verschlusselement (42) an einer oberen Seite des zweiten Teils (28) liegt.

6. Sitzgurtbefestigung (14) nach einem der vorhergehenden Ansprüche, wobei der zweite Teil (28) im Wesentlichen die Form eines U hat, mit zwei Schenkeln (44, 46), und einen Zwischenteil (48), wobei die Passage (30) durch das U gebildet ist und das Verschlusselement (42) zwischen den Schenkeln (44, 46) des U befestigt ist.

7. Sitzgurtbefestigung (14) nach einem der vorhergehenden Ansprüche, wobei die Sitzgurtbefestigung (14) nur eine Aufnahme zum Aufnehmen des Sitzgurtteils (18, 20) aufweist, wobei die Passage (30) eine verschließbare Öffnung (40) hat, die die eine Aufnahme bildet.

8. Sitzgurtanordnung (10), die einen Sitzgurt (12) und eine Sitzgurtbefestigung (14) aufweist, wobei die Sitzgurtbefestigung (14) einem der vorhergehenden Ansprüche entspricht, wobei der Sitzgurtteil (18, 20) des Sitzgurts (12) an der Sitzgurtbefestigung (14) befestigt ist.

9. Sitzgurtanordnung (10) nach Anspruch 8, wobei der Sitzgurtteil (18, 20) eine geschlossene Schleife (32) bildet und ein Teil (34) des zweiten Teils (28) durch die Schleife (32) durchgeht und dadurch den Sitzgurtteil (18, 20) an der Sitzgurtbefestigung (14) befestigt.

10. Sitzgurtanordnung (10) nach Anspruch 8 oder 9, wobei der Sitzgurtteil (18, 20) ein Endteil des Sitzgurts (12) ist.

11. Fahrzeug, das eine Sitzgurtbefestigung (14) nach einem der Ansprüche 1 bis 7 und/oder eine Sitzgurtanordnung (10) nach einem der Ansprüche 8 bis 10 aufweist.

12. Verfahren zum Befestigen eines Sitzgurtteils (18, 20) an einer Sitzgurtbefestigung (14), wobei die Sitzgurtbefestigung (14) einem der Ansprüche 1 bis 7 entspricht,
wobei das Verfahren die folgenden Schritte aufweist:
- Einfügen des Sitzgurtteils (18, 20) durch die Öffnung (40) der Passage (30), wobei die Öffnung (40) in dem offenen Zustand ist; und
- danach Schließen der Öffnung (40), wodurch der Sitzgurtteil (18, 20) an der Sitzgurtbefestigung (14) befestigt wird, wobei die Passage (30) einen geschlossenen Umfang hat, wenn sie geschlossen ist.

13. Verfahren nach Anspruch 12, wobei der Sitzgurtteil (18, 20) ein Endteil des Sitzgurts (12) ist, wobei das Verfahren Folgendes aufweist:
- Bilden einer Schleife (32) des Sitzgurtteils (18, 20),
- Einfügen des Sitzgurtteils (18, 20) durch die Öffnung (40) der Passage (30), wobei die Öffnung (40) in ihrem offenen Zustand ist, durch Führen der Schleife (32) über den Teil (34) des zweiten Teils (28) der Sitzgurtbefestigung (14) oder durch Durchführen des Verschlusselements durch die Schleife,
- danach Schließen der Öffnung (40) durch das Verschlussmittel (42), wodurch die Schleife (32) mit der Sitzgurtbefestigung (14) verbunden wird, wobei die Passage (30) einen geschlossenen Umfang hat, wenn sie geschlossen ist.

14. Verfahren zum Montieren einer Sitzgurtanordnung (10) in einem Fahrzeug, wobei das Fahrzeug eine Karosserie (22) und einen Sitz (24) aufweist,
wobei die Sitzgurtanordnung (10) einen Sitzgurt (12) und eine Sitzgurtbefestigung (14) aufweist, wobei die Sitzgurtbefestigung (14) einem der Ansprüche 1 bis 7 entspricht, wobei das Verfahren die folgenden Schritte aufweist:
- Befestigen des ersten Teils (26) der Sitzgurtbefestigung (14) an der Fahrzeugkarosserie (22) und/oder an dem Fahrzeugsitz (24);
- Einfügen eines Sitzgurtteils (18, 20) durch die Öffnung (40), wobei die Öffnung (40) in dem offenen Zustand ist; und
- danach Schließen der Öffnung (40), wodurch der Sitzgurtteil (18, 20) an der Sitzgurtbefestigung (14) befestigt wird, wobei die Passage (30) einen geschlossenen Umfang hat, wenn sie geschlossen ist.

15. Verfahren nach Anspruch 14, wobei der Schritt des Einfügens des Sitzgurtteils (18, 20) durch die Öffnung (40) nach dem Schritt des Befestigens der Sitzgurtbefestigung (14) an der Fahrzeugkarosserie (22) und/oder an dem Fahrzeugsitz (24) ausgeführt wird.

16. Verfahren nach Anspruch 14 oder 15, wobei der Schritt des Einfügens des Sitzgurtteils (18, 20) durch die Öffnung (40) ausgeführt wird, nachdem der Fahrzeugsitz (24) in das Fahrzeug montiert wurde.

17. Verfahren nach Anspruch 16, wobei der Sitzgurt von oberhalb oder unterhalb her befestigt ist, wobei die Sitzgurtbefestigung (14) in der Fahrzeugkarosserie (22) und/oder dem Fahrzeugsitz (24) vormontiert ist.

18. Verfahren nach einem der Ansprüche 12 bis 17, wobei der Schritt des Verschließens der Öffnung gemessen und optional in einem Produktionsdatensystem protokolliert wird, zum Beispiel durch Messen und Protokollieren eines verwendeten Drehmoments.

## Revendications

1. Ancrage de ceinture de sécurité (14), comprenant :
- une première portion (26) pouvant être attachée directement à une caisse de véhicule (22) et/ou à un siège de véhicule (24) ; et
- une deuxième portion (28) comprenant un passage (30) à travers lequel une portion de ceinture de sécurité (18, 20) peut être reçue,
ledit passage (30) étant utilisé pour attacher ledit ancrage de ceinture de sécurité (14) à ladite portion de ceinture de sécurité (18, 20),
ledit passage (30) ayant une ouverture refermable (40),
ladite ouverture (40) ayant un état ouvert, dans lequel ladite portion de ceinture de sécurité (18, 20) peut être insérée dans ledit passage (30), et un état fermé, dans lequel ladite ouverture (40) retient ladite portion de ceinture de sécurité (18, 20) dans ledit ancrage de ceinture de sécurité (14),
**caractérisé en ce que**
ledit passage (30) a une circonférence fermée lorsque ladite ouverture (40) est dans ledit état fermé,
ledit ancrage de ceinture de sécurité (14) comprend en outre un organe de fermeture amovible (42) pour fermer ladite ouverture (40), et
ledit organe de fermeture (42) est accessible depuis le dessus à travers un axe général vertical de l'organe de fermeture (42) lorsqu'il est monté dans un véhicule.

2. Ancrage de ceinture de sécurité (14) selon la revendication 1, dans lequel ladite première portion (26) et ladite deuxième portion (28) sont fabriquées d'une seule pièce.

3. Ancrage de ceinture de sécurité (14) selon la revendication 1 ou 2, dans lequel ledit organe de fermeture (42) est un boulon, une vis, une goupille ou une pince.

4. Ancrage de ceinture de sécurité (14) selon l'une quelconque des revendications précédentes, dans lequel ledit organe de fermeture (42) est situé au niveau d'un côté latéral (41) de ladite deuxième portion (28).

5. Ancrage de ceinture de sécurité (14) selon l'une quelconque des revendications précédentes, dans lequel ledit organe de fermeture amovible (42) est situé au niveau d'un côté supérieur de ladite deuxième portion (28).

6. Ancrage de ceinture de sécurité (14) selon l'une quelconque des revendications précédentes, dans lequel ladite deuxième portion (28) a essentiellement la forme d'un U, avec deux branches (44, 46) et une portion intermédiaire (48), ledit passage (30) étant formé par le U et ledit organe de fermeture (42) étant attaché entre les branches (44, 46) dudit U.

7. Ancrage de ceinture de sécurité (14) selon l'une quelconque des revendications précédentes, dans lequel ledit ancrage de ceinture de sécurité (14) comprend un réceptacle unique pour recevoir ladite portion de ceinture de sécurité (18, 20), ledit passage (30) ayant ladite ouverture refermable (40) formant ledit réceptacle unique.

8. Agencement de ceinture de sécurité (10) comprenant une ceinture de sécurité (12) et un ancrage de ceinture de sécurité (14), ledit ancrage de ceinture de sécurité (14) étant selon l'une quelconque des revendications précédentes, une portion de ceinture de sécurité (18, 20) de ladite ceinture de sécurité (12) étant attachée audit ancrage de ceinture de sécurité (14).

9. Agencement de ceinture de sécurité (10) selon la revendication 8, dans lequel ladite portion de ceinture de sécurité (18, 20) forme une boucle fermée (32) et une partie (34) de ladite deuxième portion (28) passe à travers ladite boucle (32), pour ainsi attacher ladite portion de ceinture de sécurité (18, 20) audit ancrage de ceinture de sécurité (14).

10. Agencement de ceinture de sécurité (10) selon la revendication 8 ou 9, dans lequel ladite portion de ceinture de sécurité (18, 20) est une portion d'extrémité de ladite ceinture de sécurité (12).

11. Véhicule comprenant un ancrage de ceinture de sécurité (14) selon l'une quelconque des revendications 1 à 7, et/ou un agencement de ceinture de sécurité (10) selon l'une quelconque des revendications 8 à 10.

12. Procédé pour attacher une portion de ceinture de sécurité (18, 20) à un ancrage de ceinture de sécurité (14), ledit ancrage de ceinture de sécurité (14) étant selon l'une quelconque des revendications 1 à 7,
ledit procédé comprenant les étapes consistant à :
- insérer ladite portion de ceinture de sécurité (18, 20) à travers ladite ouverture (40) dudit passage (30), ladite ouverture (40) étant dans l'état ouvert ; et
- fermer ensuite ladite ouverture (40), pour ainsi attacher ladite portion de ceinture de sécurité (18, 20) audit ancrage de ceinture de sécurité (14), ledit passage (30) ayant une circonférence fermée lorsqu'il est fermé.

13. Procédé selon la revendication 12, ladite portion de ceinture de sécurité (18, 20) étant une portion d'extrémité de ladite ceinture de sécurité (12), ledit procédé comprenant :
- former une boucle (32) de ladite portion de ceinture de sécurité (18, 20),
- insérer ladite portion de ceinture de sécurité (18, 20) à travers ladite ouverture (40) dudit passage (30), ladite ouverture (40) étant dans l'état ouvert, en enfilant ladite boucle (32) par-dessus ladite partie (34) de ladite deuxième portion (28) dudit ancrage de ceinture de sécurité (14), ou en faisant passer ledit organe de fermeture à travers la boucle,
- fermer ensuite ladite ouverture (40) au moyen dudit organe de fermeture (42), pour ainsi attacher ladite boucle (32) audit ancrage de ceinture de sécurité (14), ledit passage (30) ayant une circonférence fermée lorsqu'il est fermé.

14. Procédé de montage d'un agencement de ceinture de sécurité (10) dans un véhicule, ledit véhicule comprenant une caisse (22) et un siège (24),
ledit agencement de ceinture de sécurité (10) comprenant une ceinture de sécurité (12) et un ancrage de ceinture de sécurité (14), ledit ancrage de ceinture de sécurité (14) étant selon l'une quelconque des revendications 1 à 7,
ledit procédé comprenant les étapes consistant à :
- attacher ladite première portion (26) dudit ancrage de ceinture de sécurité (14) à ladite caisse de véhicule (22) et/ou audit siège de véhicule (24) ;
- insérer une portion de ceinture de sécurité (18, 20) à travers ladite ouverture (40), ladite ouverture (40) étant dans l'état ouvert ; et
- fermer ensuite ladite ouverture (40), pour ainsi attacher ladite portion de ceinture de sécurité (18, 20) audit ancrage de ceinture de sécurité (14), ledit passage (30) ayant une circonférence fermée lorsqu'il est fermé.

15. Procédé selon la revendication 14, dans lequel ladite étape d'insertion de ladite portion de ceinture de sécurité (18, 20) à travers ladite ouverture (40) est effectuée après l'étape de fixation dudit ancrage de ceinture de sécurité (14) à ladite caisse de véhicule (22) et/ou audit siège de véhicule (24).

16. Procédé selon la revendication 14 ou 15, dans lequel ladite étape d'insertion de ladite portion de ceinture de sécurité (18, 20) à travers ladite ouverture (40) est effectuée après que ledit siège de véhicule (24) a été monté dans ledit véhicule.

17. Procédé selon la revendication 16, dans lequel ladite ceinture de sécurité est attachée par le haut ou par le bas, ledit ancrage de ceinture de sécurité (14) étant pré-assemblé dans ladite caisse de véhicule (22) et/ou sur ledit siège de véhicule (24).

18. Procédé selon l'une quelconque des revendications 12 à 17, dans lequel l'étape de fermeture de ladite ouverture est mesurée et est optionnellement enregistrée dans un système de données de production, par exemple en mesurant et en enregistrant un couple de torsion utilisé.
